# FASCICULE DE BREVET EUROPEEN

(11) **EP 2 140 790 B1**
(45) Date de publication et mention de la délivrance du brevet: **15.08.2012**
(21) Numéro de dépôt: 09356044.9
(22) Date de dépôt: 01.07.2009
(51) Int. Cl.: A47J 37/12

(54) **Appareil de cuisson à résistance électrique plongeante comportant un dispositif d'aspiration des vapeurs de cuisson**
Kochgerät mit elektrischem Tauchwiderstand, das eine Vorrichtung zum Aufsaugen der Kochdämpfe umfasst
Cooking appliance with submersible element incorporating a steam suction device

(30) Priorité: 02.07.2008 FR 0803749
(43) Date de publication de la demande: 06.01.2010
(73) Titulaire: SEB S.A., 69130 Ecully (FR)
(72) Inventeur: Payen, Jean-Marc, 21800 Quetigny (FR); Pellerin, Olivier, 21510 Minot (FR); Seurat, Frédéric, 21490 Bretigny (FR)
(74) Mandataire: Kiehl, Hubert

(56) Documents cités:
- EP-A- 0 343 141
- WO-A-93/10698
- US-A- 3 941 043
- US-A- 4 903 587

## Description

La présente invention concerne le domaine technique des appareils de cuisson comprenant une cuve prévue pour contenir un bain de cuisson ainsi qu'une résistance électrique agencée dans la cuve. La présente invention concerne notamment, mais non exclusivement les friteuses électriques du type précité.

La présente invention concerne plus particulièrement le dispositif de filtration des vapeurs de cuisson.

Il est connu du document WO 93/10698 un appareil de cuisson comportant une enceinte de cuisson comprenant une cuve et un couvercle, l'enceinte de cuisson présentant une admission d'air et une sortie d'air et de vapeurs de cuisson reliée à un dispositif d'aspiration et de filtration, une résistance électrique chauffante étant agencée dans la cuve, la résistance électrique chauffante étant issue d'une unité de commande séparable de la cuve. L'unité de commande est montée amovible sur un corps principal recevant la cuve. Le dispositif d'aspiration et de filtration est agencé dans le corps principal et présente un circuit d'aspiration et de filtration de vapeurs de cuisson agencé en partie en dessous de la cuve. Une telle construction contribue à augmenter la section transversale de l'appareil. Le corps principal présente un volume important. De plus l'efficacité de l'aspiration est réduite, du fait des coudes présents dans ledit circuit d'aspiration et de filtration de vapeurs de cuisson.

Un objet de la présente invention est d'améliorer l'ergonomie d'un appareil de cuisson à résistance électrique plongeante comportant un dispositif de filtration des vapeurs de cuisson issues d'une cuve prévue pour recevoir un bain de cuisson.

Un autre objet de la présente invention est de réduire l'encombrement d'un appareil de cuisson à résistance électrique plongeante comportant un dispositif de filtration des vapeurs de cuisson issues d'une cuve prévue pour recevoir un bain de cuisson.

Un autre objet de la présente invention est d'améliorer l'efficacité de la filtration des vapeurs de cuisson dans un appareil de cuisson à résistance électrique plongeante comportant une cuve prévue pour recevoir un bain de cuisson.

Ces objets sont atteints avec un appareil de cuisson, notamment friteuse électrique, comportant une enceinte de cuisson comprenant une cuve et un couvercle comportant une fenêtre de visualisation, l'enceinte de cuisson présentant une admission d'air et une sortie d'air et de vapeurs de cuisson reliée à un dispositif d'aspiration, l'air introduit par l'admission d'air étant dirigé vers la sortie d'air et de vapeurs de cuisson en passant sous la fenêtre de visualisation, une résistance électrique chauffante étant agencée dans la cuve, la résistance électrique chauffante étant reliée à un boîtier de commande séparable de la cuve, du fait que le dispositif d'aspiration est porté par le boîtier de commande. Cette disposition permet de simplifier la construction de l'enceinte de cuisson et d'améliorer l'ergonomie d'un appareil de cuisson à résistance électrique plongeante comportant un dispositif d'aspiration des vapeurs de cuisson issues d'une cuve prévue pour recevoir un bain de cuisson.

Selon un mode de réalisation avantageux, le dispositif d'aspiration est logé dans le boîtier de commande. En alternative, le dispositif d'aspiration pourrait notamment être monté amovible par rapport au boîtier de commande.

Avantageusement, la sortie d'air et de vapeurs de cuisson est agencée au dessus du niveau d'un bord supérieur de la cuve. Cette disposition permet de favoriser l'extraction de l'air chargé de vapeurs de cuisson et d'obtenir un appareil compact.

Avantageusement alors, le dispositif d'aspiration est associé à un dispositif de filtration. Avantageusement encore le dispositif de filtration est au moins partiellement agencé en amont du dispositif d'aspiration.

Avantageusement alors, le dispositif de filtration est porté par le boîtier de commande. Cette disposition permet de simplifier le démontage de l'appareil.

Avantageusement encore, le dispositif de filtration comporte un élément de filtration monté amovible par rapport au dispositif d'aspiration. Cette disposition permet de faciliter l'entretien de l'appareil.

Avantageusement alors, le dispositif d'aspiration comporte un organe de ventilation accessible lorsque l'élément de filtration est retiré de l'appareil. Cette disposition permet également de faciliter l'entretien de l'appareil.

Avantageusement alors, l'élément de filtration comporte un organe de détection de présence prévu pour actionner un interrupteur autorisant le fonctionnement de l'appareil lorsque l'élément de filtration est en place dans l'appareil et interdisant le fonctionnement de l'appareil lorsque l'élément de filtration n'est pas en place dans l'appareil. Cette disposition permet d'améliorer la sécurité de l'appareil.

Avantageusement encore, l'élément de filtration comprend une cartouche filtrante montée amovible dans un support de cartouche. Cette disposition permet une construction plus économique du dispositif de filtration.

Avantageusement alors, l'organe de détection de présence est disposé sur le support de cartouche. Cette disposition permet de simplifier la construction de la cartouche filtrante.

Avantageusement encore, la sortie d'air et de vapeurs de cuisson est agencée sur le support de cartouche. Cette disposition permet de simplifier la construction de la cartouche filtrante.

Avantageusement encore, le dispositif d'aspiration présente une évacuation de vapeurs de cuisson ménagée sur un côté du boîtier de commande. Cette disposition permet de réduire la taille du boîtier de commande et d'éviter que l'utilisateur ne soit gêné par les vapeurs de cuisson sortant de l'appareil lors de l'utilisation du boîtier de commande, notamment pour régler une température de cuisson et/ou un temps de cuisson.

Avantageusement alors, le dispositif d'aspiration présente une autre évacuation de vapeurs de cuisson ménagée sur un autre côté du boîtier de commande, l'organe de ventilation étant agencé entre le côté et l'autre côté du boîtier de commande. Cette disposition permet de faciliter l'évacuation des vapeurs de cuisson en conservant une taille réduite pour le boîtier de commande.

Avantageusement encore, le boîtier de commande présente un organe de support. Ainsi le boîtier de commande retiré de l'appareil peut reposer sur une surface d'appui. Cette caractéristique n'est pas nécessairement limitée à un boîtier de commande portant un dispositif d'aspiration et/ou un dispositif de filtration.

Avantageusement encore, le boîtier de commande présente une zone d'enroulement d'un cordon électrique. Cette disposition permet d'améliorer l'ergonomie de l'appareil. Cette caractéristique n'est pas nécessairement limitée à un boîtier de commande portant un dispositif d'aspiration et/ou un dispositif de filtration.

Avantageusement alors, l'organe de support est agencé en dessous de la zone d'enroulement du cordon électrique. Cette disposition permet d'améliorer la compacité de l'appareil. Cette caractéristique n'est pas nécessairement limitée à un boîtier de commande portant un dispositif d'aspiration et/ou un dispositif de filtration.

Selon une forme de réalisation avantageuse, la cuve est agencée dans un boîtier extérieur. Cette disposition permet de diminuer la température des parois latérales de l'appareil.

Avantageusement alors, la cuve est montée amovible par rapport au boîtier extérieur. Cette disposition permet de faciliter le nettoyage de l'appareil.

Avantageusement alors l'admission d'air est ménagée entre le boîtier extérieur et le couvercle. Cette disposition permet de simplifier la construction de l'appareil.

Avantageusement encore, l'admission d'air et la sortie d'air et de vapeurs de cuisson sont ménagées de manière opposée par rapport à la cuve. Cette disposition permet un meilleur balayage de la surface de la cuve entraînant une meilleure extraction des vapeurs de cuisson.

L'invention sera mieux comprise à l'étude d'un exemple de réalisation, pris à titre nullement limitatif, illustré dans les figures annexées 1 à 12, dans lesquelles :
- la figure 1 est une vue en perspective et en éclaté d'un exemple d'un appareil de cuisson selon l'invention,
- la figure 2 est une vue en perspective assemblée de l'appareil illustré sur la figure 1,
- la figure 3 est une vue en perspective de l'appareil illustré sur la figure 2, dans laquelle le couvercle et un élément de filtration ont été retirés.
- la figure 4 est une vue en perspective avant de l'unité de filtration de l'appareil illustré sur les figures 1 et 2,
- la figure 5 est une vue en perspective arrière et en éclaté de l'unité de filtration illustrée sur la figure 4.
- la figure 6 est une vue latérale en coupe longitudinale de l'appareil illustré sur les figures 1 et 2,
- la figure 7 est une vue en perspective en coupe partielle longitudinale et transversale de l'appareil illustré sur les figures 1 et 2,
- la figure 8 est une vue arrière en coupe transversale au niveau de la cuve de l'appareil illustré sur les figures 1 et 2,
- la figure 9 est une vue de face en coupe transversale au niveau de la cuve de l'appareil illustré sur les figures 1 et 2,
- la figure 10 est une vue de face en coupe transversale au niveau du dispositif de ventilation de l'appareil illustré sur les figures 1 et 2,
- la figure 11 est une vue partielle en perspective de l'appareil illustré sur les figures 1 et 2 montrant un dispositif de sécurité associé à l'unité de filtration,
- la figure 12 est une vue partielle de côté de l'appareil illustré sur les figures 1 et 2.

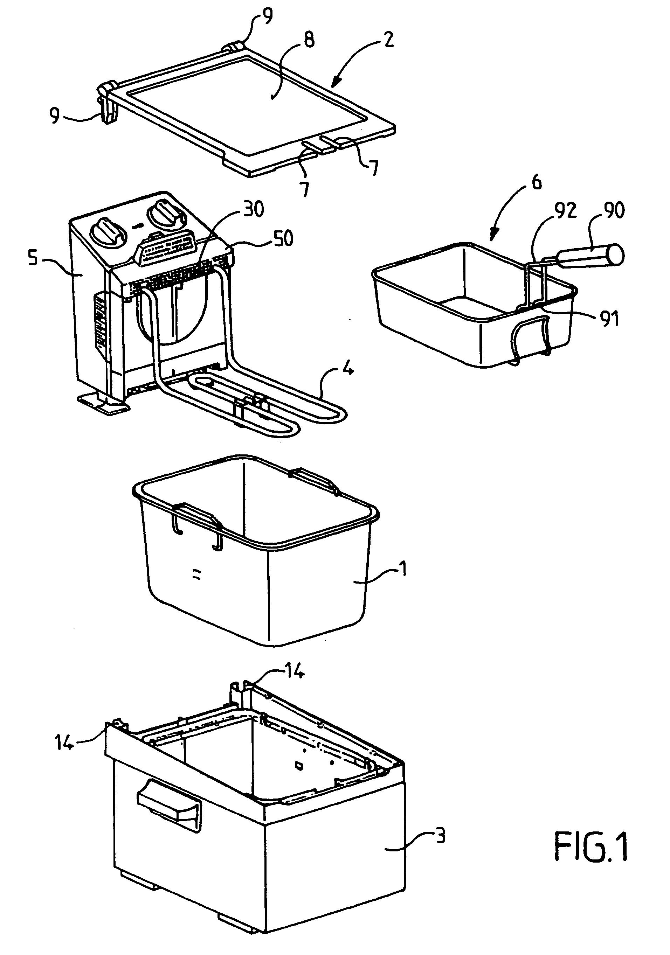

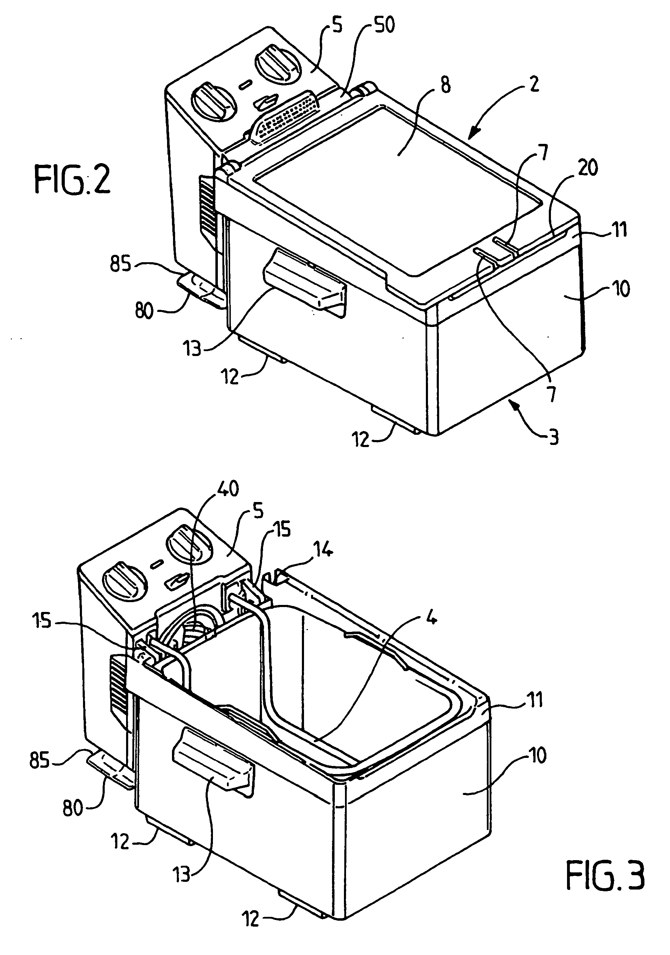

Les figures 1 et 2 illustrent un appareil de cuisson, notamment une friteuse électrique, comportant une enceinte de cuisson comprenant une cuve 1 et un couvercle 2. La cuve 1 est agencée dans un boîtier extérieur 3. La cuve 1 est montée amovible par rapport au boîtier extérieur 3.

L'appareil comporte une résistance électrique chauffante 4 reliée à un boîtier de commande 5 séparable de la cuve 1.

La cuve 1 est prévue pour recevoir un bain de cuisson. Un panier 6 est prévu pour être placé dans la cuve 1 et pour recevoir les aliments. Le panier 6 peut notamment présenter des parois latérales et/ou un fond ajourés et/ou grillagés. Le panier 6 présente une poignée 90.

Le couvercle 2 présente des encoches 7 prévues pour le passage de la poignée 90. La poignée 90 présente une zone d'appui inférieure 91 prévue pour la tenue du panier 6 en position relevée dans la cuve 1. La poignée 90 présente une zone d'appui supérieure 92 prévue pour la tenue du panier 6 en position abaissée dans la cuve 1.

Le couvercle 2 comporte une fenêtre de visualisation 8. La surface de la fenêtre de visualisation 8 est supérieure ou égale à 50% de la surface de la cuve 1. Avantageusement la fenêtre de visualisation 8 est réalisée en verre.

Le boîtier extérieur 3 présente une partie inférieure 10 réalisée par exemple en tôle métallique et une partie supérieure 11 avantageusement réalisée en matière plastique. La partie inférieure 10 est munie d'éléments de support 12. Une poignée 13 est disposée sur chacune des faces latérales de la partie inférieure 10. La partie supérieure 11 est prévue pour supporter la cuve 1. Le couvercle 2 comporte des tenons 9 pivotants prévus pour être engagés dans des logements 14 du boîtier extérieur 3. Ainsi le couvercle 2 est monté pivotant sur le boîtier extérieur 3. Le couvercle 2 est monté amovible sur le boîtier extérieur 3.

Tel que visible sur la figure 3, la résistance électrique chauffante 4 est agencée dans la cuve 1. Le boîtier de commande 5 est assemblé avec le boîtier extérieur 3, par exemple au moyen de glissières, non représentées sur les figures. Avantageusement, le boîtier extérieur 3 porte le boîtier de commande 5.

L'enceinte de cuisson présente une admission d'air 20, mieux visible sur la figure 2, ainsi qu'une sortie d'air et de vapeurs de cuisson 30, mieux visible sur la figure 1, reliée à un dispositif d'aspiration 40, mieux visible sur la figure 3. L'admission d'air 20 est agencée en regard de la sortie d'air et de vapeurs de cuisson 30, de manière à limiter les pertes de charge. Cette disposition favorise l'obtention d'un flux laminaire d'air entrant par l'admission d'air 20 lorsque les émissions de vapeur de cuisson sont faibles. Cette disposition permet une meilleure évacuation de l'air et des vapeurs de cuisson lorsque les émissions de vapeur de cuisson sont plus importantes, notamment lors de la plongée du panier 6 contenant les aliments à frire dans la cuve 1 recevant un bain de cuisson. Le couvercle 2 présente une paroi inférieure inclinée vers le haut entre l'admission d'air 20 et la sortie d'air et de vapeurs de cuisson 30. Tel que montré sur la figure 2, l'admission d'air 20 est ménagée entre le boîtier extérieur 3 et le couvercle 2.

Plus particulièrement, le dispositif d'aspiration 40 est porté par le boîtier de commande 5. Ainsi le dispositif d'aspiration 40 est amovible par rapport à la cuve 1.

Le dispositif d'aspiration 40 est associé à un dispositif de filtration 50, représenté sur les figures 1 et 2. Le dispositif de filtration 50 est avantageusement au moins partiellement agencé en amont du dispositif d'aspiration 40. Plus particulièrement, le dispositif de filtration 50 est porté par le boîtier de commande 5. Le dispositif de filtration 50 comporte un élément de filtration 51 amovible par rapport au dispositif d'aspiration 40.

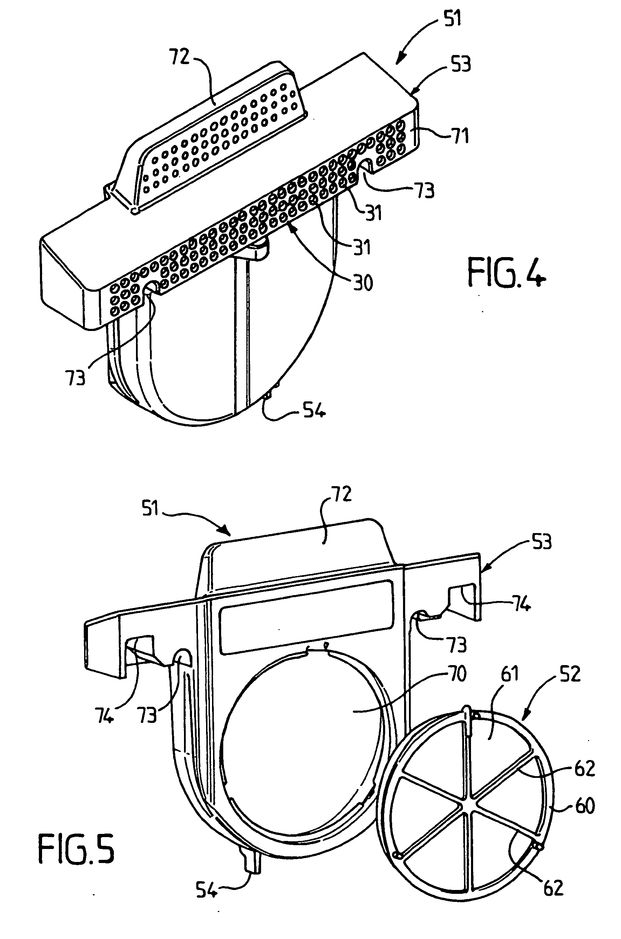

Tel que mieux visible sur les figures 4 et 5, l'élément de filtration 51 comprend une cartouche filtrante 52 montée amovible dans un support de cartouche 53. La cartouche filtrante 52 comporte un cadre 60 entourant une surface filtrante 61. Des bras 62 issus du cadre 60 segmentent la surface filtrante 61. La surface filtrante 61 comporte avantageusement un ou plusieurs filtres à charbon actif. La cartouche filtrante 52 est montée dans une ouverture 70 du support de cartouche 53, par exemple au moyen d'un verrouillage à baïonnette.

Tel que bien visible sur les figures 1, 4, 6, 7 et 9, la sortie d'air et de vapeurs de cuisson 30 comporte une pluralité de perforations 31 formant des conduits s'étendant en regard de la fenêtre de visualisation 8. Ainsi l'air aspiré par le dispositif d'aspiration 40 tend à balayer la face inférieure de la fenêtre de visualisation 8.

La sortie d'air et de vapeurs de cuisson 30 est agencée sur le support de cartouche 53. La sortie d'air et de vapeurs de cuisson 30 se présente avantageusement sous la forme d'une pluralité de perforations 31 ménagées dans une paroi frontale 71 du support de cartouche 53. Le support de cartouche 53 forme un corps creux conduisant l'air et les vapeurs de cuisson de la sortie d'air et de vapeurs de cuisson 30 à la cartouche filtrante 52. Le support de cartouche 53 présente un organe de préhension 72. Le support de cartouche 53 présente des encoches inférieures 73 prévues pour le passage de la résistance électrique chauffante 4. Le support de cartouche 53 présente des zones d'appui 74 prévues pour reposer sur le boîtier de commande 5, plus particulièrement sur des montants 15 visibles sur la figure 3.

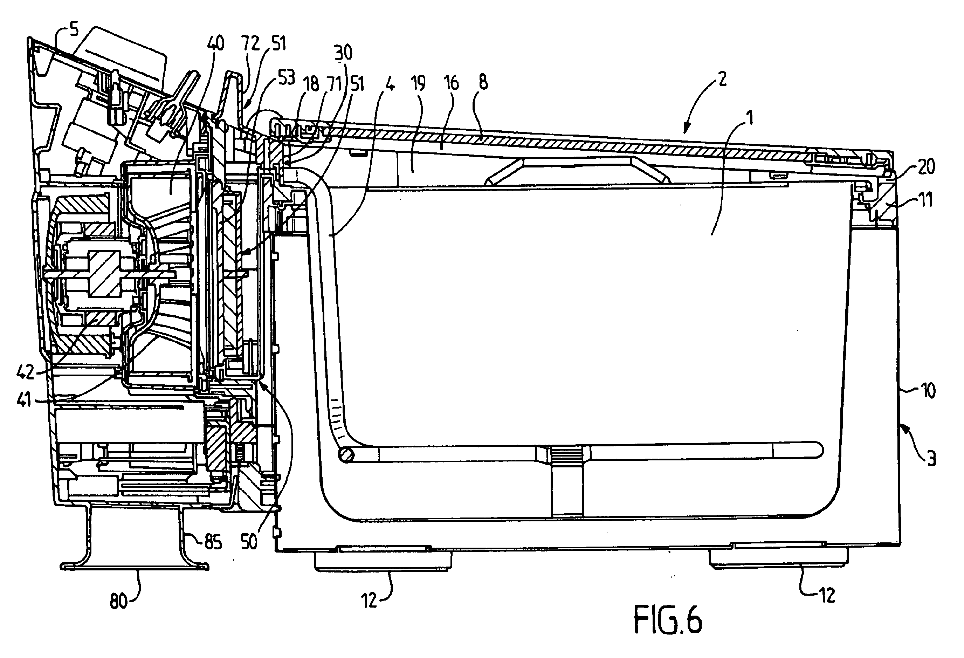

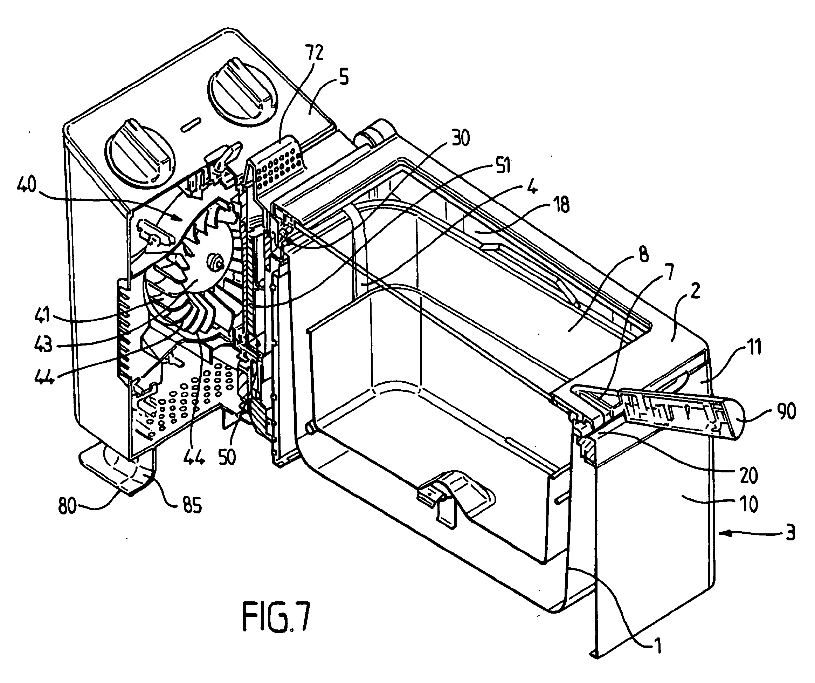

Tel que mieux visible sur les figures 6 et 7, la fenêtre de visualisation 8 est agencée au moins partiellement au dessus de la cuve 1. La face inférieure de la fenêtre de visualisation 8 présente un profil ascendant entre l'admission d'air 20 et la sortie d'air et de vapeurs de cuisson 30. Le dispositif d'aspiration 40 est logé dans le boîtier de commande 5. Le dispositif d'aspiration 40 comporte un organe de ventilation 41 entraîné par un moteur 42. L'organe de ventilation 41 est agencé latéralement par rapport à la cuve 1. L'organe de ventilation 41 présente une zone d'aspiration 43 agencée face à la surface filtrante 61 de l'élément de filtration 51. La zone d'aspiration 43 est entourée par des pales 44. Ainsi l'organe de ventilation 41 forme une turbine centrifuge. Tel que mieux visible sur la figure 3 l'organe de ventilation 41 est accessible lorsque l'élément de filtration 51 est retiré de l'appareil. L'admission d'air 20 et la sortie d'air et de vapeurs de cuisson 30 sont ménagées de manière opposée par rapport à la cuve 1.

La cuve 1 peut être définie par une dimension longitudinale s'étendant entre l'admission d'air 20 et la sortie d'air et de vapeurs de cuisson 30 ainsi que par une première dimension transversale du côté de l'admission d'air 20 et une deuxième dimension transversale du côté de la sortie d'air et de vapeurs de cuisson 30. La fenêtre de visualisation 8 peut aussi être définie par une dimension longitudinale s'étendant entre l'admission d'air 20 et la sortie d'air et de vapeurs de cuisson 30 ainsi que par une première dimension transversale du côté de l'admission d'air 20 et une deuxième dimension transversale du côté de la sortie d'air et de vapeurs de cuisson 30.

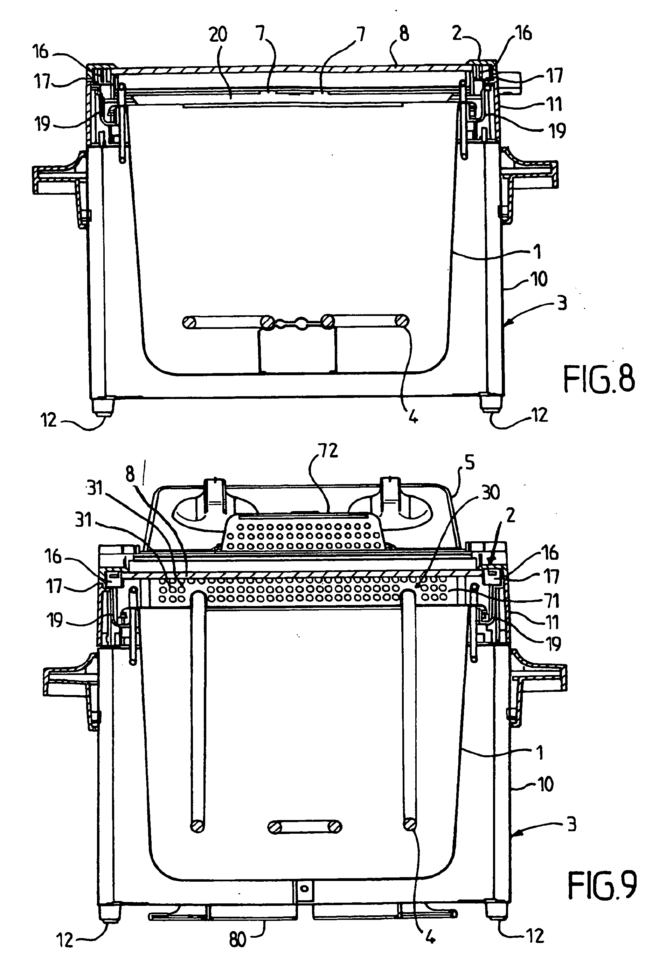

L'admission d'air 20 s'étend transversalement par rapport à la cuve 1 et par rapport à la fenêtre de visualisation 8. Tel que visible sur la figure 8, l'admission d'air 20 s'étend sur au moins 80% de la largeur de la fenêtre de visualisation 8 agencée au dessus de la cuve 1. L'admission d'air 20 s'étend sur au moins 80% de la largeur de la cuve 1.

La sortie d'air et de vapeurs de cuisson 30 s'étend transversalement par rapport à la cuve 1 et par rapport à la fenêtre de visualisation 8. Tel que visible sur la figure 9, la sortie d'air et de vapeurs de cuisson 30 s'étend sur au moins 80% de la largeur de la fenêtre de visualisation 8 agencée au dessus de la cuve 1. La sortie d'air et de vapeurs de cuisson 30 s'étend sur au moins 80% de la largeur de la cuve 1.

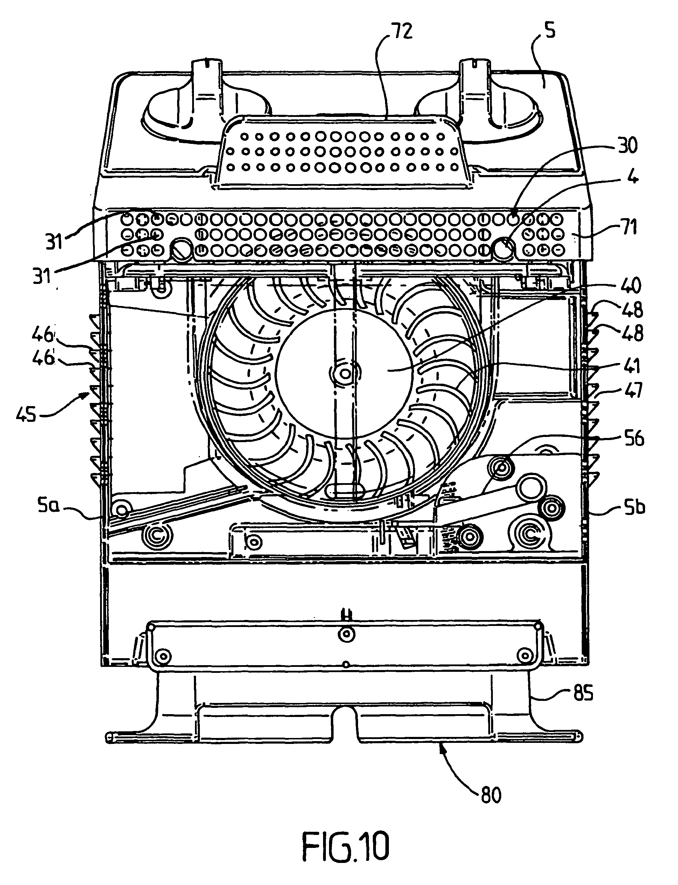

La sortie d'air et de vapeurs de cuisson 30 est agencée sur une face latérale du dispositif de filtration 50 adjacente à la cuve 1. La sortie d'air et de vapeurs de cuisson 30 est disposée frontalement par rapport au boîtier de commande 5, tel que visible notamment sur la figure 10. La sortie d'air et de vapeurs de cuisson 30 est agencée au dessus du niveau d'un bord supérieur de la cuve 1. Ainsi la paroi frontale 71 du support de cartouche 53 est agencée au dessus du niveau d'un bord supérieur de la cuve 1.

Tel que visible sur les figures 6, 7, 8 et 9, le couvercle 2 présente une face inférieure contribuant à canaliser l'air et les vapeurs de cuisson vers la sortie d'air et de vapeurs de cuisson 30, en coopération avec des faces intérieures 19 de la partie supérieure 11 du boîtier extérieur 3. Plus particulièrement, la fenêtre de visualisation 8 est montée entre deux éléments latéraux 16 du couvercle 2 prévus pour être logés entre des bords supérieurs 17 du boîtier extérieur 3 lorsque le couvercle 2 est rabattu, tel que visible sur les figures 8 et 9. Si désiré un joint 18 peut être monté sous le couvercle 2 afin de prendre appui sur l'élément de filtration 51 lorsque le couvercle est rabattu, tel que visible sur la figure 6. En alternative une entrée d'air additionnelle agencée entre le couvercle 2 et l'élément de filtration 51 ou le boîtier de commande 5 présente avantageusement une section inférieure à la section de l'admission d'air 20.

Tel que visible sur les figures 7, 8 et 9, la distance entre l'admission d'air 20 et la sortie d'air et de vapeurs de cuisson 30 est supérieure à la largeur de l'admission d'air 20 ; la distance entre l'admission d'air 20 et la sortie d'air et de vapeurs de cuisson 30 est supérieure à la largeur de la sortie d'air et de vapeurs de cuisson 30.

Tel que visible sur la figure 10, le dispositif d'aspiration 40 présente une évacuation de vapeurs de cuisson 45 ménagée sur un côté 5a du boîtier de commande 5. L'évacuation de vapeurs de cuisson 45 présente des ouies d'échappement 46 orientées vers le haut. Le dispositif d'aspiration 40 présente une autre évacuation de vapeurs de cuisson 47 ménagée sur un autre côté 5b du boîtier de commande 5, l'organe de ventilation 41 étant agencé entre le côté 5a et l'autre côté 5b du boîtier de commande. L'autre évacuation de vapeurs de cuisson 47 présente des ouies d'échappement 48 orientées vers le haut.

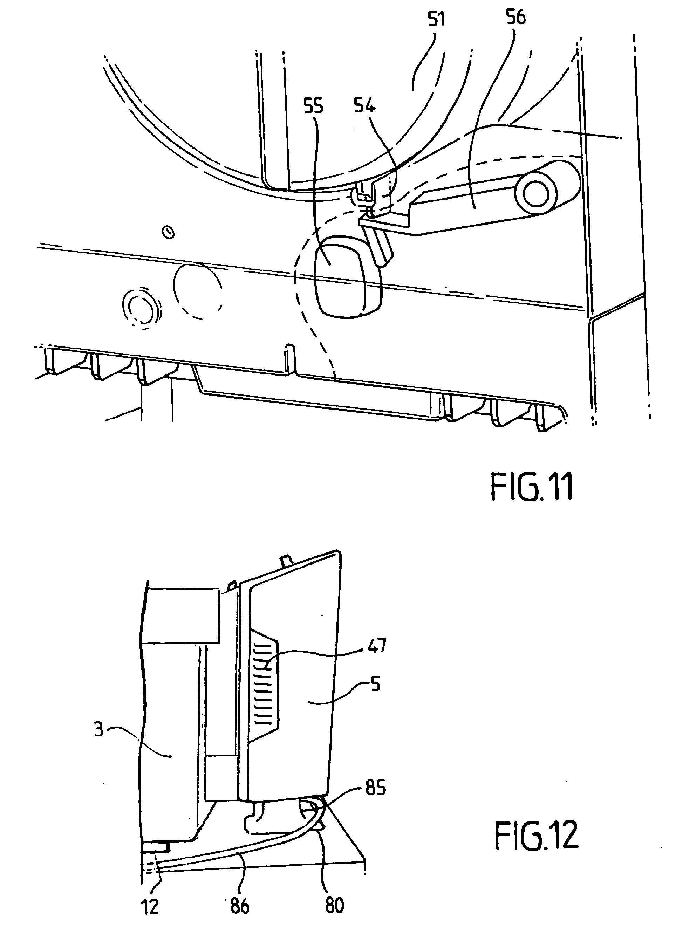

Tel que visible sur les figures 5 et 11, l'élément de filtration 51 comporte un organe de détection de présence 54 prévu pour actionner un interrupteur 55 autorisant le fonctionnement de l'appareil lorsque l'élément de filtration 51 est en place dans l'appareil et interdisant le fonctionnement de l'appareil lorsque l'élément de filtration 51 n'est pas en place dans l'appareil.

Tel que mieux visible sur la figure 5, l'organe de détection de présence 54 est disposé sur le support de cartouche 53. Plus particulièrement, tel que visible sur les figures 10 et 11, l'organe de détection de présence 54 actionne l'interrupteur 55 par l'intermédiaire d'un levier 56 monté pivotant.

Tel que visible sur la figure 10, le boîtier de commande 5 présente un organe de support 80. Tel que montré sur la figure 12, lorsque le boîtier de commande 5 est monté sur le boîtier extérieur 3 reposant sur un plan de travail, l'organe de support 80 s'étend à distance dudit plan de travail.

Tel que visible sur la figure 12, le boîtier de commande 5 présente une zone d'enroulement 85 d'un cordon électrique 86. Plus particulièrement, l'organe de support 80 est agencé en dessous de la zone d'enroulement 85 du cordon électrique 86. L'organe de support 80 forme un pied.

Un débit d'aspiration de 36 m³/h pour le dispositif d'aspiration 40 donne des performances d'aspiration satisfaisantes pour la cuisson de frites en bain d'huile à partir de 1 kg de pommes de terre fraîches. Le débit maximal instantané estimé de vapeurs de cuisson s'échappant du bain d'huile étant de l'ordre de 1,7 m³/h, la dilution des vapeurs de cuisson est d'environ 1:20. Un rapport de 30 entre le débit d'aspiration du dispositif d'aspiration 40 exprimé en m³/h et la capacité de l'appareil en pommes de terre fraîches exprimée en kg est considéré comme satisfaisant ; un rapport de 20 est considéré comme acceptable.

La présente invention fonctionne et s'utilise de la manière suivante.

L'utilisateur place la cuve 1 dans le boîtier extérieur 3, la résistance électrique chauffante 4 dans la cuve 1 et le couvercle 2 sur le boîtier extérieur 3. L'utilisateur peut programmer la température de cuisson et le temps de cuisson. L'utilisateur peut placer des aliments tels que des pommes de terre fraîches ou surgelées précuites dans le panier 6, de préférence en position relevée au dessus d'un bain de cuisson contenu dans la cuve 1. La mise en marche de l'appareil entraîne l'alimentation de la résistance électrique chauffante 4 et du dispositif d'aspiration 40. L'utilisateur rabat de préférence le couvercle 2 sur le boîtier extérieur 3. Le dispositif d'aspiration 40 aspire de l'air ambiant par l'admission d'air 20. L'air introduit par l'admission d'air 20 est dirigé vers la sortie d'air et de vapeurs de cuisson 30 en passant sous la fenêtre de visualisation 8. Plus particulièrement, l'air introduit par l'admission d'air 20 est canalisé sous la fenêtre de visualisation 8 vers la sortie d'air et de vapeurs de cuisson 30 par la partie supérieure de l'enceinte de cuisson agencée au dessus de la cuve 1. Le flux d'air généré par le dispositif d'aspiration 40 réalise un balayage des vapeurs de cuisson sous la fenêtre de visualisation 8 vers la sortie d'air et de vapeurs de cuisson 30. De préférence, l'air introduit dans l'enceinte de cuisson par l'admission d'air 20 et aspiré par la sortie d'air et de vapeurs de cuisson 30 balaye au moins 80% de la largeur de la surface de la fenêtre de visualisation 8 agencée au dessus de la cuve 1. Ce balayage contribue à évacuer les vapeurs de cuisson vers la sortie d'air et de vapeurs de cuisson 30, à diminuer la température de la fenêtre de visualisation 8, à éviter l'apparition de buée gênant la vision du contenu de la cuve 1, et à éviter la formation de condensats susceptibles de retomber dans le bain de cuisson, notamment lorsque l'utilisateur a plongé le panier 6 dans le bain de cuisson en position abaissée dans la cuve 1. L'air et les vapeurs de cuisson aspirés par le dispositif d'aspiration 40 sont ensuite filtrés par le dispositif de filtration 50 et rejetés à l'extérieur de l'appareil après filtration par l'évacuation de vapeurs de cuisson 45 et l'autre évacuation de vapeurs de cuisson 47.

L'appareil proposé présente les performances de cuisson d'un appareil à résistance électrique immergée dans le bain de cuisson, tout en permettant une cuisson couvercle fermé, dans laquelle les vapeurs de cuisson sont évacuées à l'extérieur de l'appareil après abaissement de leur température. La température du couvercle est également diminuée. La fenêtre de visualisation 8 du couvercle 2 permet une surveillance aisée de la cuisson grâce à la bonne visibilité procurée par le dispositif d'aspiration 40. L'appareil est démontable, la cuve 1, le panier 6, le boîtier extérieur 3 et le couvercle 2 sont dépourvus de parties électriques et peuvent être nettoyés aisément. L'élément de filtration 51 amovible peut être aisément nettoyé et/ou remplacé.

A titre de variante, le dispositif de filtration 50 n'est pas nécessairement porté par le boîtier de commande 5, mais pourrait notamment être porté par le boîtier extérieur 3.

A titre de variante, le dispositif d'aspiration 40 n'est pas nécessairement associé à une cuve 1 rectangulaire.

A titre de variante, le dispositif d'aspiration 40 n'est pas nécessairement associé à un dispositif de filtration.

A titre de variante, l'évacuation de vapeurs de cuisson 45 et/ou l'autre évacuation de vapeurs de cuisson 47 ne sont pas nécessairement ménagées latéralement sur le boîtier de commande 5, mais pourraient notamment être ménagée(s) à l'arrière du boîtier de commande 5, à l'opposé de la cuve 1.

La présente invention n'est nullement limitée à l'exemple de réalisation décrit et à ses variantes, mais englobe de nombreuses modifications dans le cadre des revendications.

## Revendications

1. Appareil de cuisson, notamment friteuse électrique, comportant une enceinte de cuisson comprenant une cuve (1) et un couvercle (2) comportant une fenêtre de visualisation (8), l'enceinte de cuisson présentant une admission d'air (20) et une sortie d'air et de vapeurs de cuisson (30) reliée à un dispositif d'aspiration (40), l'air introduit par l'admission d'air (20) étant dirigé vers la sortie d'air et de vapeurs de cuisson (30) en passant sous la fenêtre de visualisation (8), une résistance électrique chauffante (4) étant agencée dans la cuve (1), la résistance électrique chauffante (4) étant reliée à un boîtier de commande (5) séparable de la cuve (1), **caractérisé en ce que** le dispositif d'aspiration (40) est porté par le boîtier de commande (5).

2. Appareil de cuisson selon la revendication 1, **caractérisé en ce que** le dispositif d'aspiration (40) est logé dans le boîtier de commande (5).

3. Appareil de cuisson selon l'une des revendications 1 ou 2, **caractérisé en ce que** dispositif d'aspiration (40) est associé à un dispositif de filtration (50).

4. Appareil de cuisson selon la revendication 3, **caractérisé en ce que** le dispositif de filtration (50) est porté par le boîtier de commande (5).

5. Appareil de cuisson selon l'une des revendications 3 ou 4, **caractérisé en ce que** le dispositif de filtration (50) comporte un élément de filtration (51) monté amovible par rapport au dispositif d'aspiration (40).

6. Appareil de cuisson selon la revendication 5, **caractérisé en ce que** le dispositif d'aspiration (40) comporte un organe de ventilation (41) accessible lorsque l'élément de filtration (51) est retiré de l'appareil.

7. Appareil de cuisson selon l'une des revendications 5 ou 6, **caractérisé en ce que** l'élément de filtration (51) comporte un organe de détection de présence (54) prévu pour actionner un interrupteur (55) autorisant le fonctionnement de l'appareil lorsque l'élément de filtration (51) est en place dans l'appareil et interdisant le fonctionnement de l'appareil lorsque l'élément de filtration (51) n'est pas en place dans l'appareil.

8. Appareil de cuisson selon l'une des revendications 3 à 7, **caractérisé en ce que** l'élément de filtration (51) comprend une cartouche filtrante (52) montée amovible dans un support de cartouche (53).

9. Appareil de cuisson selon les revendications 7 et 8, **caractérisé en ce que** l'organe de détection de présence (54) est disposé sur le support de cartouche (53).

10. Appareil de cuisson selon l'une des revendications 8 ou 9, **caractérisé en ce que** la sortie d'air et de vapeurs de cuisson (30) est agencée sur le support de cartouche (53).

11. Appareil de cuisson selon l'une des revendications 1 à 10, **caractérisé en ce que** le dispositif d'aspiration (40) présente une évacuation de vapeurs de cuisson (45) ménagée sur un côté (5a) du boîtier de commande (5).

12. Appareil de cuisson selon la revendication 11, **caractérisé en ce que** le dispositif d'aspiration (40) présente une autre évacuation de vapeurs de cuisson (47) ménagée sur un autre côté (5b) du boîtier de commande (5), l'organe de ventilation (41) étant agencé entre le côté (5a) et l'autre côté (5b) du boîtier de commande.

13. Appareil de cuisson selon l'une des revendications 1 à 12, **caractérisé en ce que** le boîtier de commande (5) présente un organe de support (80).

14. Appareil de cuisson selon l'une des revendications 1 à 13, **caractérisé en ce que** le boîtier de commande (5) présente une zone d'enroulement (85) d'un cordon électrique (86).

15. Appareil de cuisson selon l'une des revendications 1 à 14, **caractérisé en ce que** la cuve (1) est agencée dans un boîtier extérieur (3).

## Claims

1. A cooking appliance, particularly an electric deep fryer, containing a cooking chamber comprising a bowl (1) and a cover (2) comprising a viewing window (8), the cooking chamber having an air inlet (20) as well as an air and cooking vapour outlet (30) connected to a suction device (40), the air introduced through the air inlet (20) being directed towards the air and cooking vapour outlet (30) by passing under the viewing window (8), an electric heating element (4) being arranged inside the bowl (1), the electric heating element (4) being connected to a control unit (5) that can separated from the bowl (1), **characterised in that** the suction device (40) is carried by the control unit (5).

2. A cooking appliance according to claim 1, **characterised in that** the suction device (40) is housed inside the control unit (5).

3. A cooking appliance according to one of claims 1 or 2, **characterised in that** the suction device (40) is associated with a filtration device (50).

4. A cooking appliance according to claim 3, **characterised in that** the filtration device (50) is carried by the control unit (5).

5. A cooking appliance according to one of claims 3 or 4, **characterised in that** the filtration device (50) contains a filtration element (51) removably mounted with respect to the suction device (40).

6. A cooking appliance according to claim 5, **characterised in that** the suction device (40) contains a ventilation member (41) accessible when the filtration element (51) is removed from the appliance.

7. A cooking appliance according to one of claims 5 or 6, **characterised in that** the filtration element (51) contains a presence detection member (54) designed to actuate a switch (55) allowing the operation of the appliance when the filtration element (51) is in place in the appliance and prohibiting the operation of the appliance when the filtration element (51) is not in place in the appliance.

8. A cooking appliance according to one of claims 3 to 7, **characterised in that** the filtration element (51) comprises a filter cartridge (52) removably mounted in a cartridge holder (53).

9. A cooking appliance according to one of claims 7 and 8, **characterised in that** the presence detection member (54) is arranged on the cartridge holder (53).

10. A cooking appliance according to one of claims 8 or 9, **characterised in that** the air and cooking vapour outlet (30) is arranged on the cartridge holder (53).

11. A cooking appliance according to one of claims 1 to 10, **characterised in that** the suction device (40) has a cooking vapour discharge (45) arranged on a side (5a) of the control unit (5).

12. A cooking appliance according to claim 11, **characterised in that** the suction device (40) has another cooking vapour discharge (47) arranged on another side (5b) of the control unit (5), the ventilation member (41) being arranged between side (5a) and the other side (5b) of the control unit.

13. A cooking appliance according to one of claims 1 to 12, **characterised in that** the control unit (5) has a support member (80).

14. A cooking appliance according to one of claims 1 to 13, **characterised in that** the control unit (5) has a zone (85) for winding an electric cord (86).

15. A cooking appliance according to one of claims 1 to 14, **characterised in that** the bowl (1) is arranged inside an outer housing (3).

## Patentansprüche

1. Kochgerät, insbesondere elektrische Fritteuse, umfassend einen Garraum mit einem Behälter (1) und einem Deckel (2), der ein Sichtfenster (8) umfasst, wobei der Garraum einen Lufteinlass (20) und einen Austritt für Luft und Kochdämpfe (30) umfasst, der mit einer Saugvorrichtung (40) verbunden ist, wobei die durch den Lufteinlass (20) einströmende Luft zum Austritt für Luft und Kochdämpfe (30) geleitet wird, wobei sie unter dem Sichtfenster (8) durchströmt, wobei ein elektrisches Heizelement (4) im Behälter (1) angeordnet ist, wobei das elektrische Heizelement (4) mit einem Schaltgehäuse (5) verbunden ist, das vom Behälter (1) getrennt werden kann, **dadurch gekennzeichnet, dass** die Saugvorrichtung (40) vom Schaltgehäuse (5) getragen wird.

2. Kochgerät nach Anspruch 1, **dadurch gekennzeichnet, dass** die Saugvorrichtung (40) im Schaltgehäuse (5) untergebracht ist.

3. Kochgerät nach einem der Ansprüche 1 oder 2, **dadurch gekennzeichnet, dass** die Saugvorrichtung (40) an eine Filtervorrichtung (50) angeschlossen ist.

4. Kochgerät nach Anspruch 3, **dadurch gekennzeichnet, dass** die Filtervorrichtung (50) vom Schaltgehäuse (5) getragen wird.

5. Kochgerät nach einem der Ansprüche 3 oder 4, **dadurch gekennzeichnet, dass** die Filtervorrichtung (50) ein Filterelement (51) umfasst, das in Bezug auf die Saugvorrichtung (40) herausnehmbar angebracht ist.

6. Kochgerät nach Anspruch 5, **dadurch gekennzeichnet, dass** die Saugvorrichtung (40) ein Lüftungsorgan (41) umfasst, das zugänglich ist, wenn das Filterelement (51) aus dem Gerät entfernt wurde.

7. Kochgerät nach einem der Ansprüche 5 oder 6, **dadurch gekennzeichnet, dass** das Filterelement (51) ein Organ zur Präsenzerfassung (54) umfasst, das vorgesehen ist, um einen Schalter (55) zu betätigen, der den Betrieb des Gerätes zulässt, wenn das Filterelement (51) im Gerät eingesetzt ist, und der den Betrieb des Gerätes untersagt, wenn das Filterelement (51) nicht im Gerät eingesetzt ist.

8. Kochgerät nach einem der Ansprüche 3 bis 7, **dadurch gekennzeichnet, dass** das Filterelement (51) eine Filterkartusche (52) umfasst, die herausnehmbar in einer Kartuschenhalterung (53) angebracht ist.

9. Kochgerät nach Anspruch 7 und 8, **dadurch gekennzeichnet, dass** das Organ zur Präsenzerfassung (54) auf der Kartuschenhalterung (53) angeordnet ist.

10. Kochgerät nach einem der Ansprüche 8 oder 9, **dadurch gekennzeichnet, dass** der Austritt für Luft und Kochdämpfe (30) auf der Kartuschenhalterung (53) angeordnet ist.

11. Kochgerät nach einem der Ansprüche 1 bis 10, **dadurch gekennzeichnet, dass** die Saugvorrichtung (40) eine Abführung für die Kochdämpfe (45) aufweist, die auf einer Seite (5a) des Schaltgehäuses (5) eingerichtet ist.

12. Kochgerät nach Anspruch 11, **dadurch gekennzeichnet, dass** die Saugvorrichtung (40) eine weitere Abführung für die Kochdämpfe (47) aufweist, die auf einer anderen Seite (5b) des Schaltgehäuses (5) eingerichtet ist, wobei das Lüftungsorgan (41) zwischen der einen Seite (5a) und der anderen Seite (5b) des Schaltgehäuses angeordnet ist.

13. Kochgerät nach einem der Ansprüche 1 bis 12, **dadurch gekennzeichnet, dass** das Schaltgehäuse (5) ein Tragorgan (80) aufweist.

14. Kochgerät nach einem der Ansprüche 1 bis 13, **dadurch gekennzeichnet, dass** das Schaltgehäuse (5) einen Aufwickelbereich (85) für ein Stromkabel (86) aufweist.

15. Kochgerät nach einem der Ansprüche 1 bis 14, **dadurch gekennzeichnet, dass** der Behälter (1) in einem Außengehäuse (3) angeordnet ist.
